# EUROPEAN PATENT APPLICATION

(11) **EP 2 963 854 A1**
(43) Date of publication of application: **06.01.2016**
(21) Application number: 14002276.5
(22) Date of filing: 02.07.2014
(51) Int. Cl.: H04L 9/08, H04L 29/06, H04W 12/02

(54) **Device for secure peer-to-peer communication for voice and data**

(71) Applicant: SECVRE GmbH, 80539 Munich (DE)
(72) Inventor: Palme, Marek, Newhaven, BN9 0PU (GB); Bertermann, Patrick, 80331 Munich (DE); Bertermann, Claus, 80539 Munich (DE)
(74) Representative: Grünecker Patent- und Rechtsanwälte PartG mbB

(57) **Abstract**

A cryptographic device for enabling encryption and decryption of data to be transferred between communication devices is provided. The cryptographic device comprises a first interface for connecting the cryptographic device to a communication device, wherein the first interface is adapted to transfer and receive data between the cryptographic device and the communication device; a safe memory storing one or more symmetric private keys for encrypting and decrypting data; an output module for outputting decrypted data; an input module for inputting unencrypted data; a microprocessor and a connection manager.

## Description

### BACKGROUND

For a long time, it was assumed that secure ways of communication, including standards such as SSL and voice encryption in GSM telephones are secure and there was no possibility for a third person to listen to such a communication. However, as it turned out, most of the encryption mechanisms were either designed with a trap door enabling eavesdropping by security agencies or were insecure as such or relying on trusted certificates which in effect cannot be trusted. Modern computers and mobile phones are so complex, that it is impossible to guarantee the confidentiality of data processed by them. They are in effect open systems where any number of programs and applications can be running. The sheer number of applications makes it impossible to guarantee that they are safe to be used.

Any application could contain a Trojan, which might only become active in the distant future, only after being deployed to millions of handsets. Furthermore, security agencies are having access and filtering all Internet IP traffic as well as mobile data and voice traffic as they wish. Trojans can be injected onto computers and mobile phones either through malicious software or by direct access from outside in a matter of minutes. These can then intercept all data entering and leaving the system.

Many efforts have been undertaken to reliably provide a secure communication device, which can be used for communicating without giving others the possibility to spy on the communication. However, even if data or voice on a mobile phone is encrypted before it is transmitted to another mobile phone, it is still possible to eavesdrop this data by using Trojans on the mobile phone.

Furthermore, another problem that occurs if data to be transmitted is encrypted and decrypted is the step of distributing keys to participating parties. For example, a man in the middle could intercept a communication at the critical point, when the key for decrypting the encrypted data is sent to another entity. To overcome this issue, the prior art uses asymmetric encryption, where data is encrypted using the public key of another's entity. The encrypted data can then only be decrypted by using the private key, which is only known to the other entity. However, such an asymmetric decryption scheme requires a high processing power and is not easily performed in real-time. Furthermore, when using an asymmetric encryption scheme in a mobile device, all participating entities that communicates with the mobile device use the same public key for encryption. Thus, a potential target is offered by hackers, when using the popular asymmetric encryption scheme.

Additionally, asymmetric encryption schemes offer potential hackers the possibility of a "man in the middle" attack, e.g. initiated during the exchange of the public key.

### SUMMARY

In order to overcome the above issues and problems related with the prior art, the present invention provides a cryptographic device that may be pluggable to any kind of communication device. The cryptographic device may be configured to encrypt all outgoing information in a manner that only one particular second cryptographic device may be able to encrypt that information.

According to one exemplary embodiment, a cryptographic device for enabling encryption and decryption of data to be transferred between communication devices is provided, the cryptographic device may comprise: a first interface for connecting the cryptographic device to a communication device, wherein the first interface is adapted to transfer and receive data between the cryptographic device and the communication device; a safe memory storing one or more symmetric private keys for encrypting and decrypting data; an output module for outputting decrypted data; an input module for inputting unencrypted data; a microprocessor that may be adapted to: receive encrypted data from the communication device via the first interface; decrypt the received encrypted data from the communication device using one of the symmetric private keys; transmit the decrypted data from the communication device to said output module for outputting the decrypted data; receive unencrypted data from said input module; encrypt the unencrypted data from said input module using one of the symmetric private keys; and transmit the encrypted data from said input module to the communication device via the first interface.

The cryptographic device may further comprise a connection manager for managing a connection between the communication device with another communication device comprising another cryptographic device, wherein the symmetric private key used to encrypt and/or decrypt the data is a symmetric private key that is shared between the cryptographic device and the other cryptographic device.

Further, the present invention provides a method for enabling encryption of data to be transferred between communication devices, the method may comprise: connecting a cryptographic device to a communication device via a first interface, wherein the first interface is adapted to transfer and receive data between the cryptographic device and the communication device; receiving unencrypted data from in input module of said cryptographic device; encrypting the unencrypted data from the input module using a symmetric private key; transmitting the encrypted data to the communication device via the first interface; and managing a connection between the communication device with another communication device comprising another cryptographic device, wherein the symmetric private key used to encrypt the data is a symmetric private key that is shared between the cryptographic device and the other cryptographic device.

Still further, the present invention provides a method for enabling decryption of data to be transferred between communication devices, the method may comprise: connecting a cryptographic device to a communication device via a first interface, wherein the first interface is adapted to transfer and receive data between the cryptographic device and the communication device; managing a connection between the communication device with another communication device comprising another cryptographic device, wherein the symmetric private key used to decrypt the data is a symmetric private key that is shared between the cryptographic device and the other cryptographic device; receiving encrypted data from the communication device via the first interface; decrypting the received encrypted data from the communication device using a symmetric private key; and transmitting the decrypted data to an output module for outputting the decrypted data.

### BRIEF SUMMARY OF THE FIGURES

These and other objects and features of the present invention will be more fully disclosed by the following detailed description of the preferred embodiments of the invention, which is to be considered together with the accompanying drawings, wherein:
FIG. 1 is a block diagram, illustrating a cryptographic device that is pluggable to a mobile device;
FIG. 2 is a block diagram of a cryptographic device;
FIG. 3 is a flow chart for a pairing process between two cryptographic devices;
FIG. 4 is a flow chart for an alternative pairing process between two cryptographic devices;
FIG. 5 is a block diagram of a cryptographic device connected to a mobile device, illustrating the process making an encrypted phone call;
FIG. 6 is a flow chart for establishing a connection between two cryptographic devices; and
FIGS. 7, 8, 9 and 10 are block diagrams, illustrating alternative details of establishing the connection between two cryptographic devices.

### DETAILED DESCRIPTION

Reference will now be made in detail to the exemplary embodiments, examples of which are illustrated in the accompanying drawings, wherein like reference numerals refer to like elements throughout.

This first exemplary embodiment provides a device, which can be plugged to a mobile phone and that can be used for encrypting and decrypting of information outside the mobile phone's operating system. The core of the device is a microprocessor, which may have internal volatile and programmable non-volatile memory included on the chip. The program and security data may be stored in the non-volatile part of the chip. The access to the on-chip memories may be exclusive through the microprocessor. The microprocessor may have a custom operating system and all access is through a custom protocol. This protocol may not allow any read or write access to the secret information. Furthermore, there may be no possibility to update the firmware on the device, that way not allowing any possibility to access the private secured data. Specific embodiments of the above-described concepts are now described in more detail in the context of the figures.

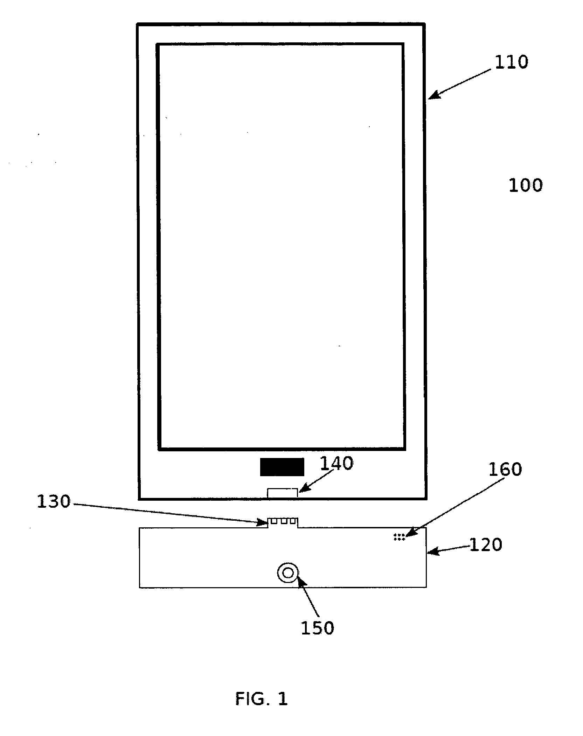

With regards to FIG. 1, a system 100 is illustrated, wherein a mobile device 110 is provided with a cryptographic device 120, which is connected via a first interface 130 to the mobile device 110. The mobile device 110 comprises an interface 140, which may be a micro-USB interface. The first interface 130 of the cryptographic device 120 may be connected to the interface 140 of the mobile device 110. The interface 140 of the mobile device 110 may be for example the conventional micro-USB port for charging and exchanging data with the mobile device 110. The mobile device 110 in this exemplary embodiment may be a smartphone with an operating system, such as Android from Google, iOS from Apple, Windows Mobile from Microsoft, or any other operating system. However, the present invention is not limited to using a smartphone in combination with the cryptographic device 120. In particular, any device may be used that is capable of communicating with other devices, e.g. over the Internet. Furthermore, the exemplary embodiments are not limited to the usage of a mobile phone, but also computers, such as PCs, Macs, handheld devices or tablet PCs may be used.

As further illustrated in FIG. 1, the cryptographic device 120 comprises an input module 150 and an output module 160. In the illustrated exemplary embodiment, the output module 150 is formed as a speaker for outputting sound. Likewise, the input module 160 is illustrated as being a microphone for inputting sound, such as voice. However, alternative or additional input modules and/or output modules may be provided for the cryptographic device 120. For example, further embodiments may comprise a keyboard, a touchpad, a memory card slot and/or a display for inputting and/or outputting information to the cryptographic device 120, as described further below. Furthermore, the cryptographic device 120 may also comprise connection ports for external microphones, speakers, headsets and/or other external input and output devices. These connection ports may be wired ports (e.g., USB, jack plug etc.) or wireless ports, such as Bluetooth, in order to connect a Bluetooth headset to the cryptographic device 120.

In a further embodiment, the cryptographic device 120 may further be used as a secure wireless headset, using its microphone, speaker and Bluetooth radio and incorporating an attachment that enables the fixing on or near the ear. In this embodiment, the cryptographic device 120 may further comprise a battery or another energy providing unit (not shown) to use the cryptographic device in a state where it is not physically connected to the mobile device 110, but where the cryptographic device wirelessly communicates (e.g. via Bluetooth) with the mobile device 110.

As described above, the cryptographic device 120 may also comprise a slot for memory cards. For example, a micro-SD card slot may be provided in the cryptographic device 120. In this manner, it is possible to directly feed the cryptographic device 120 with data files stored in the memory card. The cryptographic device 120 may then encrypt the stored data files and transmit these files via the mobile device 110. Alternatively or in addition, the cryptographic device 120 may be used for encrypting the data on the memory card without transmitting the data via the mobile device. In this case, the data stored on the memory card cannot be accessed by any other entity than the cryptographic device 120, using its private secret key.

When connecting the cryptographic device 120 to the mobile device 110 and/or by switching the mobile device on, the user is asked to enter the correct PIN or password of the cryptographic device 120. If the wrong PIN or password is entered more than 3 times, the cryptographic device 120 may be locked so that it can only be accessed by entering a master PIN. If then the wrong master PIN is entered, the cryptographic device 120 may erase all its memories and may be set to a factory state.

For security reasons, the passwords of the cryptographic device 120 may be reset by a user. However, every time the password is reset, all data is erased from the cryptographic device 120.

In further embodiments, the cryptographic device 120 may not be plugged to the mobile device 110, but may be part of the mobile device 110. In other words, the cryptographic device 120 may be fully implemented by the mobile device. However, if the cryptographic device 120 is implemented into the mobile device 110, the same parts may be used as when using the cryptographic device 120 as an external device.

Alternative embodiments may provide the cryptographic device 120 as part of a protective cover for the mobile device 110. In such an embodiment, the cryptographic device 120 as being part of a protective cover is connected to the interface 140 of the mobile device 110 and may provide an extra display, touchscreen, and/or touchpad on the backside of the mobile device 110. Still other embodiments may provide a keyboard to be pulled out from the mobile device or the protective cover. This pull-out keyboard may be a keyboard for directly providing inputs into the cryptographic device 120.

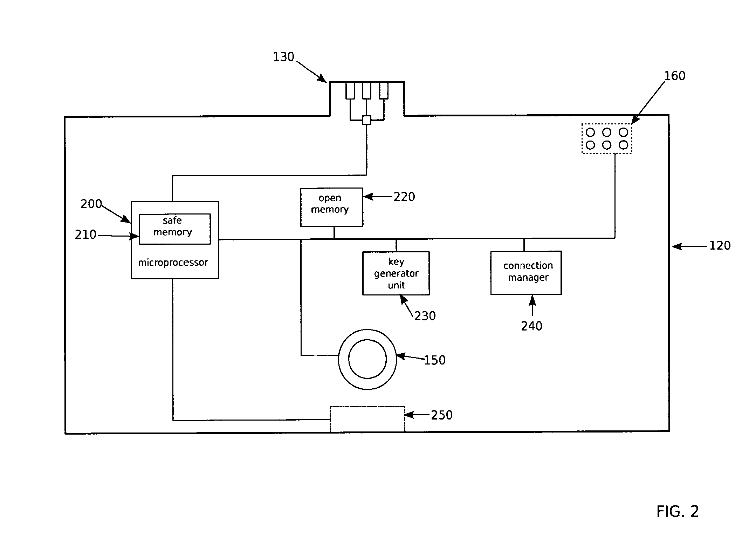

FIG. 2 illustrates a block diagram of the cryptographic device 120. As can be seen in FIG. 2, the cryptographic device 120 comprises a microprocessor 200, which itself comprises a safe memory 210. Alternatively, the safe memory 210 may also be located outside the microprocessor 200. The safe memory 210 may store a plurality of keys, as further discussed below. The cryptographic device 120 further comprises an open memory 220, which is connected to the microprocessor 200. In alternative embodiments, the open memory 220 may also be part of the microprocessor 200. The open memory 220 may be used for storing information such as contact IDs, as further discussed below. Additionally, the cryptographic device 120 further comprises a key generator unit 230 used for generating keys in a pairing process, as further discussed below. Furthermore, a connection manager 240 and a second interface 250 may be a part of the cryptographic device 120, as further described below.

In operation, the cryptographic device 120 may be plugged into the mobile device 110 via the first interface 130, so that it can be used as a dongle for encryption and decryption of data to be transmitted via the mobile device 110. Data that is to be transmitted by the mobile device 110 is first encrypted by the microprocessor 200 using a secret symmetric key, which is stored in the safe memory 210. The used symmetric encryption scheme may be the advanced encryption standard, AES 256, or any other symmetric encryption scheme that provides a high reliability in view of security.

Data to be encrypted may be for example voice, which is input through the microphone 160 of the cryptographic device 120. In this regard, a telephone conversation can be performed by using the microphone 160 and the speaker 150 of the cryptographic device 120. The microprocessor 200 may then encrypt the input sound from the microphone 160 by using the encryption scheme and a symmetric key stored in the memory 210. Thereafter, encrypted voice data is transmitted to the mobile device 110 via the first interface 130 in order to be transmitted to another entity, i.e. another mobile device also comprising an according cryptographic device 120.

In the same manner, the microprocessor 200 may also receive encrypted data (e.g. voice or voice messages) from the mobile device 110 via the first interface 130. The microprocessor 200 then decrypts the encrypted data (e.g. the voice messages) by using the appropriate symmetric key stored in the memory 210, before the decrypted sound is output by the speaker 150. In this manner, all encrypting and decrypting is performed outside of the mobile device 110 and the mobile device 110 merely receives encrypted data. Thus, as the operating system of the mobile device 110 does not have access to unencrypted data at any time, the risk of eavesdropping by Trojans or other applications is removed.

Even though, data to be encrypted in the above described embodiments is directly input into the cryptographic device 120 before transmitted to the mobile device 110, unencrypted data may also be derived from the mobile device 110 through the first interface 130. The microprocessor 200 of the cryptographic device 120 then receives the unencrypted data from the mobile device 110, encrypts the data using an appropriate symmetric key and retransmits the encrypted data to the mobile device 110 for transmission.

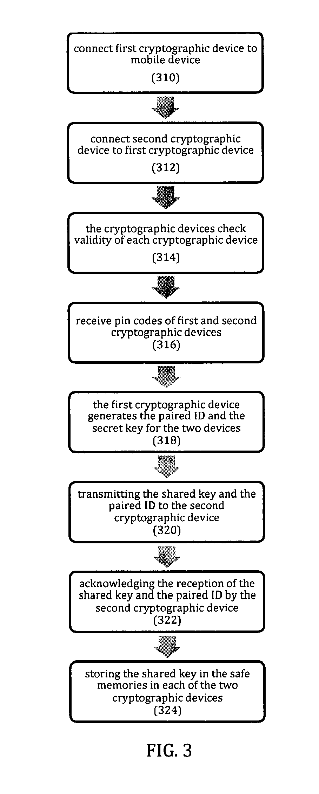

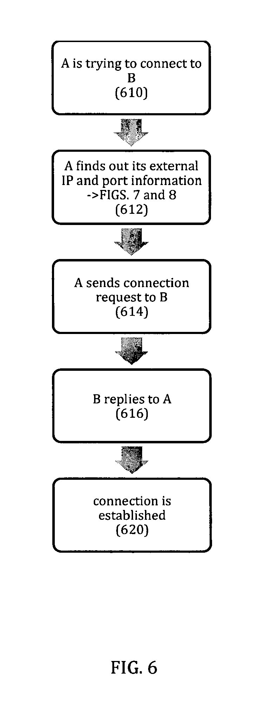

For encrypting and decrypting data, the microprocessor 200 uses a symmetric key, which is stored in the safe memory 210. The safe memory 210 may store a plurality of different symmetric keys. A symmetric key in the safe memory 210 is used for encryption and decryption of a conversation between exactly two cryptographic devices 120, which share the symmetric key. This means that for each contact of the user, an individual symmetric private key is generated and shared between the user and the contact. The shared symmetric key is generated by the key generator unit 230, as further described below with regard to the repairing process, which is described in FIG. 3. When a telephone connection is to be established, the connection manager 240 may manage or establish a peer-to-peer connection between the mobile device 110 and another mobile device using a cryptographic device, as further discussed below this regards to FIG. 6.

With regard to FIG. 3, a method for pairing two cryptographic devices is shown. As already discussed above, one individual shared symmetric key is used for each contact of the user so that one key is only used for communication with one contact and not for another contact. In one embodiment, each cryptographic device has a micro-USB female plug that is used to execute the pairing process, which guarantees 100% security facilitated by the secure key exchange mechanism, as described below. However, other physical interfaces than USB may also be used for the pairing process.

By requiring the physical contact between two cryptographic devices when performing the pairing process (the process of generating and sharing the symmetric key), it is impossible for a third party to eavesdrop and get hold of the key.

In step 310, a first cryptographic device 120 is connected to the mobile device 110 via the interfaces 130 (of the cryptographic device 120) and 140 (of the mobile device 110). In alternative embodiments, the connection between the first cryptographic device 120 and the mobile device 110 may not be established through a wired interface, but may be established by wireless interfaces, such as Wi-Fi, Bluetooth, NFC or other wireless commutation protocols.

Thereafter, a second cryptographic device is connected to the first cryptographic device 120 in step 312. For example, the second cryptographic device may also comprise an interface, such as interface 130 of the cryptographic device 120. In addition, the first cryptographic device 120 comprises a second interface 250, which can be used to couple the two cryptographic devices with each other. In other words, the second cryptographic device is plugged into the second interface 250 of the first cryptographic device 120. However, the connection between the first and second cryptographic devices may also be a short range wireless connection, such as Bluetooth, infrared, NFC etc.

In one embodiment, when the second cryptographic device is plugged into the first cryptographic device, which receives power from the mobile device, it detects that situation by a high level on its ID pin available on the micro-USB connector. The second cryptographic device signals to the first cryptographic device its presence by pulling the ID pin low. The second cryptographic device then disconnects its pins from the USB port and connects them internally to a two wire serial port. The first cryptographic device also enables its serial port on the USB connector pins where the second cryptographic device is connected.

In step 314, the cryptographic devices may check the validity of the other cryptographic device, respectively. For example, only cryptographic devices of a common manufacturer or distributer may be used for security reasons. To check each other's validity, a secret master key may be used. For example, the first cryptographic device 120 may encrypt a request to the second cryptographic device, using the secret master key. Then, only if the second cryptographic device is able to decrypt the encrypted requests by using its version of the secret master key, the second device successfully determines that the first cryptographic device is a valid device. However, other ways to determine each other's validity are possible.

Optionally, the mobile device 110 may ask for the PINs of either user in step 316. This step may be performed in order to disallow unauthorized pairing and may be a user option in the cryptographic device configuration menu. For example, when a user repeatedly enters a wrong pin number, the cryptographic devices may erase their memories so that all user data (keys, contacts etc.) is deleted from the cryptographic devices and the cryptographic devices are reset to factory state.

Once both cryptographic devices are satisfied that they can proceed, the first cryptographic device 120 generates a paired ID and a secret key in step 318. The secret key may be generated by the key generator unit 230 of the first device 120. The key may be generated according to a random process. The paired ID identifies which key may be used for encryption and decryption of the commutation between two cryptographic devices.

Thereafter, the first cryptographic device 120 transmits the generated Paired Secret Key and the paired ID to the second cryptographic device in step 320. In more detail, the information transmitted to the second cryptographic device comprises the paired ID, the Paired Secret Key and the name and the phone number of the user of the first cryptographic device 120. In one embodiment, the above information including the paired ID, contact information and the generated Paired Secret Key are encrypted with the secure master key before being transmitted to the second cryptographic device.

In step 322, the second cryptographic device may acknowledge the reception of the above information. In particular, the second cryptographic device replies by sending back (again encrypted with the secure master key) the paired ID (the same ID as before) and the name and phone number of the user of the second cryptographic device.

Thereafter, the first and second cryptographic devices now may store the data in their safe memories 210 in step 324. In one embodiment, the cryptographic devices store the Paired Secret Key in the safe memory 210 and store the paired ID and the name and phone number information in the open memory 220. However, in alternative embodiments, all of the above-described information may be stored in the safe memory 210.

Both cryptographic devices are now ready for 100% secure communication between them. Optionally, success of the pairing may be displayed on the screen of the mobile device 110. Once this message has been displayed, the second cryptographic device may be removed from the first cryptographic device 120.

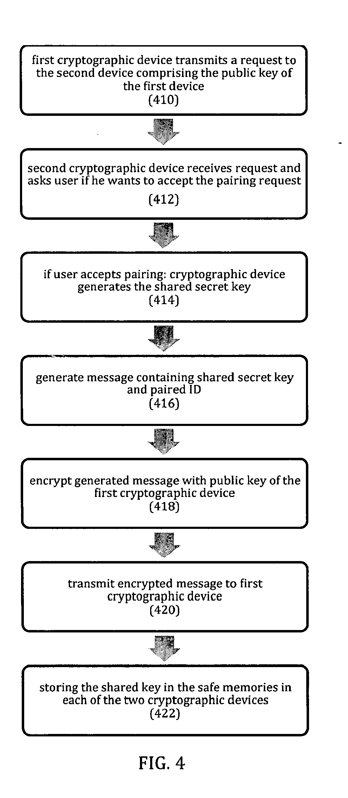

An alternative concept for remotely pairing two cryptographic devices is shown in FIG. 4.

In case a physical contact cannot be established between the two cryptographic devices, a provision of pairing process can be performed, using private/public key pairs stored in the cryptographic devices, as further discussed below.

This alternative concept for remotely pairing two cryptographic devices is initiated by a first cryptographic device 120, which transmits a request for pairing to a second cryptographic device in step 410. This request includes the public key of the first cryptographic device 120 and may further include an ID of the first cryptographic device 120. In one exemplary embodiment, the request may be transmitted via SMS to the second cryptographic device. However, also other message systems may be used for transmitting the request, including email or instant messaging.

When the second cryptographic device receives the request, it asks the user if he wants to accept the pairing request in step 412. For example, the second cryptographic device may initiate the mobile device 110 to display information about the request of the first cryptographic device 120. Thereupon, the user may choose to accept the pairing process. However, if the user decides not to accept the pairing process, the process may be terminated.

On the other hand, if the user accepts the pairing process in step 414, the second cryptographic device generates the Paired Secret Key, which is used for communication between the first and second cryptographic devices. This step of generating the shared private key may be similar to the generating of the Paired Secret Key, as described in relation with FIG. 3.

When the Paired Secret Key has been generated by the second cryptographic device, the second cryptographic device generates a message in step 416, which contains the Paired Secret Key and a paired ID. In addition, the generated message may also include the name and phone number according to the second cryptographic device. Furthermore, the message may in some embodiments also comprise the public key of the second cryptographic device.

In step 418, the second cryptographic device may encrypt the generated message, comprising all or part of the above information, by using the public key of the first cryptographic device 120. Thereafter, the encrypted message may be transmitted to the first cryptographic device 120.

Similar to FIG. 3, both cryptographic devices may then store the Secret Key in their safe memories 210 in each of the cryptographic devices. In this exemplary embodiment, no physical contact between the first and second cryptographic devices is necessary to share a common symmetric key.

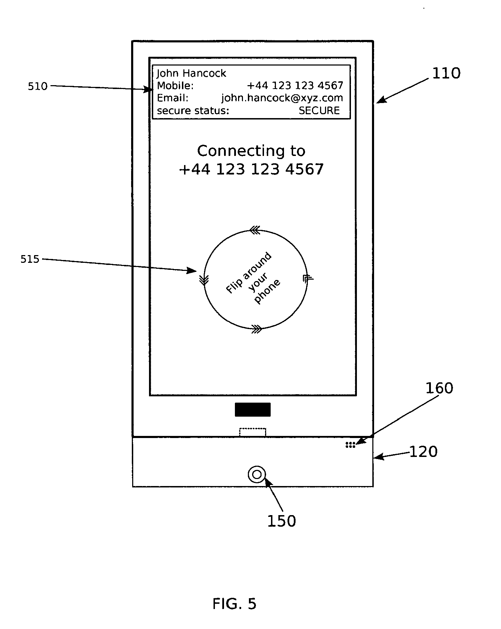

FIG. 5 shows an example of using the cryptographic device 120 in connection with a mobile device 110 for setting up a telephone conversation. As can be seen in the exemplary embodiment of FIG. 5, the cryptographic device 120 is in the form of a dongle, which is connected to the mobile device 110. However, the herein described embodiments are not limited to a dongle.

To provide the user with the ability to use the cryptographic device's functionality, the mobile device 110 may have installed an application for the cryptographic device 120. The application may be started upon connecting the cryptographic device 120 to the mobile device 110. Cryptographic device 120 may request a pin code before being able to be used.

The application may be used in order to manage the user's contacts. In one embodiment, the application may also be used in order to establish a connection between the cryptographic device 120 and another's cryptographic device via telephone, email, messaging or peer-to-peer. For example, all contacts of the user - that use a cryptographic device according to the present invention - may be displayed within the application.

Advantageously, the input module 160 and the output module 150 comprise a microphone and a speaker. In this manner, every unencrypted voice input and decrypted voice output is to and from the cryptographic device 120 instead of to and from the mobile device 110, itself. Thus, the operating system of the mobile device 110 is not able to access any unencrypted voice messages, neither downstream nor upstream. As described above, the cryptographic device 120 may further comprise interfaces for being connectable to an external microphone or headset.

In one embodiment, as the speaker 150 is located at the cryptographic device 120, which itself may be connected to a lower portion of the mobile device 110, the mobile device 110 may present the user a notice 515 to turn the mobile device 110 upside down. In this manner, the speaker 115 of the cryptographic device 120 is located adjacent to the user's ear during use. In this case, also the microphone 160 may be located adjacent to the user's ear. However, the microphone 160 may still be able to record any voice of the user.

As already discussed above, the cryptographic device 120 is not limited to encrypt and decrypt telephone conversations only. In addition, the cryptographic device 120 may also be used for exchanging any kind of data, including text messages (emails, SMS, instant messages etc.), video conversation and data files. In this regard, the cryptographic device 120 may comprise further input modules and output modules for directly inputting and outputting data into the cryptographic device 120, without using the mobile device 110 as an input device or an output device. For example, when the decrypted data is transmitted from the cryptographic device 120 to the mobile device 110 for displaying, the operating system of the mobile device 110 may have access to the decrypted data. Thus, Trojans may have access to the decrypted data while being rendered in the mobile device 110.

To overcome this possible target for attacks, the cryptographic device 120 may be in the form of a tablet, providing means for displaying text messages, outputting any kind of graphical information, capturing and displaying images and videos, recording voice and/or capturing touch gestures. In this manner, any input to be encrypted and any output to be decrypted is performed via the cryptographic device 120 instead of the mobile device 110. However, the present invention is not limited to this concept of inputting and outputting data and data from the mobile device 110 may also be transmitted to the cryptographic device 120 for being encrypted.

For example, any file stored in the mobile device 110 may be transmitted through the interfaces 130 and 140 to the cryptographic device 120 to be encrypted. After successfully encrypting the data files from the mobile device 110, the cryptographic device 120 may retransmit the encrypted data files to the mobile device 110, either for storing in the mobile device 110 or for transmitting over the network.

FIG. 6 shows a flow diagram showing the process of establishing a connection between two cryptographic devices A and B. When the expression is used that a connection is established between one cryptographic device and another cryptographic device, it is meant that a first system, consisting of a first mobile device connected to a first cryptographic device, is in connection with a second system, consisting of a second mobile device connected to a second cryptographic device. For example, the connection manager 240 may manage the connection between the first and second cryptographic device. Thus, in one embodiment, the connection manager 240 may instruct the mobile device 110 to establish the connection.

In the exemplary embodiment of FIG. 6, cryptographic device A is trying to establish a connection with cryptographic device A in step 610. For example, A is trying to connect to B for a Call, Chat or File Transfer.

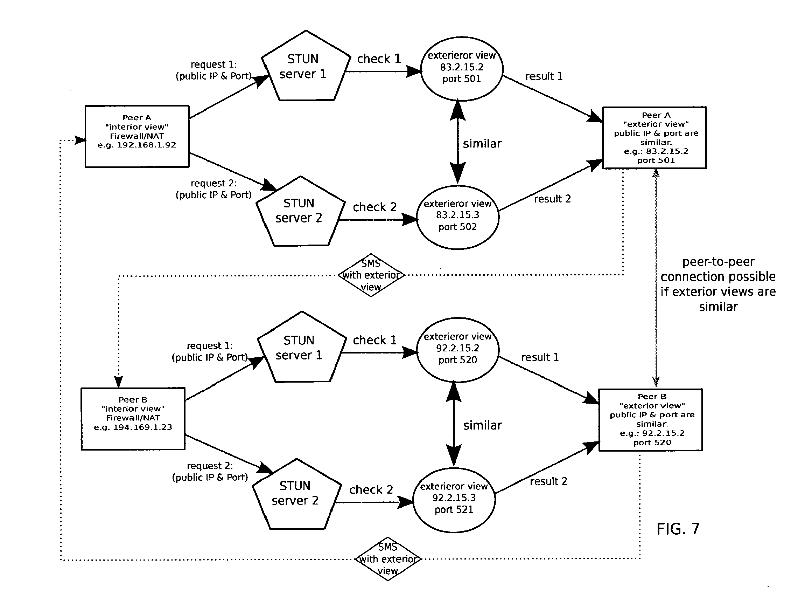

For this, A finds out its external IP and port information, as described in regard to FIGS. 7, 8, 9 and 10. If necessary, a Relay Server may be used, as further described below.

Thereafter, A sends a connection request to B in step 614. This request may be sent on a specific port. The sent data is the encrypted sender port information and session token which is randomly generated by the Sender A. The encryption of the request may be performed in two stages as follows:

The Sender and Session info is assembled into a data block.

| |
|---|
| IP Address |
| Port |
| Session token |
| Channel on Relay server (optionally) |

The above information is then encrypted using the Paired Secret Key only known to the sender A and the receiver B. A new data block is generated which contains the data above and the paired ID of A and B, which is generated during the pairing process, as described above.

| |
|---|
| ID |
| Encrypted Sender and Session info |

This block may then be encrypted using a global secret key. The reason for this two-stage encryption of the request is that if a spy is monitoring outgoing messages from A or incoming messages to B, he or she cannot decrypt the Senders source IP address, even if he or she has a cryptographic device of the present invention and total knowledge about the communication protocol between cryptographic device 120 and mobile device 110. Such knowledge will not enable the spy to eavesdrop on the communication, however, he could start a Denial Of Service attack.

There may exist at least two possibilities of how to transmit the request from A to B, which are further discussed below:

### Possibility 1 using Data SMS

In this case, cryptographic device A uses a specific data port to send the binary data. The advantage of this possibility is that the SMS is not visible to the receiver. In other words, connection establishment is invisible in the background. However, a possible drawback of this possibility may be that the port number for using Data SMS might be in use by some other Application.

### Possibility 2 using Text SMS

In this second case, the encrypted information is send using a standard SMS. The SMS is initiated within the cryptographic device 120 and appended is the encrypted data block above. The advantage of this second possibility is that the user notices if somebody is trying to contact him via the cryptographic device 120 even if for some reason the Service of the cryptographic device 120 is not running. The user may then connect the cryptographic device 120 which will start the Service.

Referring back to FIG. 6, in step 616, the cryptographic device B replies to the cryptographic device A. the pending on the choice of connection, the cryptographic device B they likewise find out it exterior view, i.e. its external IP address and its port information. This step of determining the exterior of the cryptographic device B will be further describes indeed embodiments, described in FIGS. 7, 8, 9 and 10. This reply may be performed according to different possibilities.

### Possibility 1, send reply over SMS:

According to the first possibility, the cryptographic device B creates an encrypted data block as described above, with the session ID being the same as received from A. The message block is then sent to cryptographic device A either as a Data SMS or as a Text SMS.

### Possibility 2, send reply over Relay Server:

When cryptographic device A has indicated in its SMS message that it is using a Relay Server, then the reply may be sent already using the Relay Server. In this case the reply is sent as a Datagram Packet in the following format:

| |
|---|
| Channel on Relay Server |
| Session Token |

Since the communication is done via a Relay Server, A does not need to know about B's IP Address and Port.

In an alternative embodiment, it is possible to minimize the exchange of SMS and to speed up the connection setup. In particular, it is possible to always do connection establishment using the Relay Server. In this case cryptographic device A always starts with allocating a channel on the Relay Server, if possible. Cryptographic device B then does not have to send a reply SMS but can start negotiating with A via the Relay server. If A and B can establish a peer-to-peer connection then, they will do that and immediately release the channel on the Relay Server.

The encrypted data block may then have following format, encrypted with the Paired Secret Key.

| |
|---|
| IP Address of Relay Server |
| Port of Relay Server |
| Session token |
| Channel on Relay Server |

Again, this would be appended to the paired ID and encrypted with the global secret key.

| |
|---|
| ID |
| Encrypted Sender and Session info |

The SMS is then formatted and sent as proposed above. Cryptographic device A then starts listening on the port that it has used to allocate the channel on the Relay Server.

Cryptographic device B sends a Datagram Packet with following format to A via the Relay Server:

| |
|---|
| Channel on Relay Server |
| Session ID |
| Message ID: CONNECTION_INFO |
| Address Type: |
| 1 - IP Address and Port are confirmed |
| 2 - IP Address is confirmed, the Port is approximate |
| 3 - IP Address and Port random, Peer To Peer not possible |
| |
| If address is ipv6, then the Address Type is incremented by 100 |
| IP Address |
| Port number |

Upon reception of that packet, cryptographic device A replies to B by sending a CONNECTION_INFO with its own parameters.

Depending on the combination of the Address Type from A and B, a peer-to-peer connection or another type of connection might be established. The table below shows different scenarios for different address types of cryptographic devices A and B.

| Address Type A | Address Type B | Connection |
|---|---|---|
| 1 | 1 | P2P |
| 1 | 2 | (i) |
| 1 | 3 | Relay |
| 2 | 1 | (ii) |
| 2 | 2 | (iii) |
| 2 | 3 | Relay |
| 3 | 1 | Relay |
| 3 | 2 | Relay |
| 3 | 3 | Relay |

| | | |
|---|---|---|
| (i) A sends a number of Datagram Discovery packets to different Port numbers around the port number specified by B. B Datagram Discovery packets to the Address and port supplied by B. As soon as A or B receive a discovery packet, they send a Discovery Acknowledge packet to the remote peer and a peer-to-peer channel has been established. (ii) As above with A and B reversed. (iii) A and B start sending Datagram Discovery packets to the port number specified by the remote peer via the Relay server. As soon as any peer receives a Discovery packet they reply with a Discovery Acknowledge packet to the address and port from which the packet was sent. As soon as the Discovery Acknowledge has been received the Peer to Peer connection has been established and the channel on the Relay Server is closed. | | |

An example of a Discovery Packet may be:

| |
|---|
| Session ID |
| Message ID: DISCOVERY |

And an example of a Discovery Acknowledge Packet may be:

| |
|---|
| Session ID |
| Message ID: DISCOVERY_ACK |

If a peer-to-peer connection cannot be established within a certain time period, then the Relay server is used for the communication. If the Relay Server is not available or there is no channel available, then the two-way SMS method (as described above) has to be used as a fallback and in some circumstances the connection cannot be established.

In this case, if a peer-to-peer communication cannot be established, an encrypted data file may be created for transmitting via a conventional data protocol. The encrypted data file contains either
- Encrypted digital file information, and/or
- Encrypted Audio data (audio message).

The format of the file may be as follows:

| |
|---|
| Paired ID, encrypted with Secure Master Key |
| Data encrypted with the Paired Secret Key |

The data can only be decrypted by the sender and the receiver with the matching paired ID. Since the paired ID is encrypted with the Secret Master Key, no information is accessible by a third person eavesdropping the conversation.

Referring back to FIG. 6, the connection between cryptographic devices A and B is established in step 620. In this state, the cryptographic devices A and B may now exchange encrypted data, which is encrypted by the Paired Secret Key of the cryptographic devices A and B.

As discussed above in relation with steps 612 and 616 of FIG. 6, the cryptographic devices A and B may determine their exterior views (i.e. public IP address and port) in order to establish a connection between them.

FIG. 7 is a block diagram showing the process of determining the exterior views of the cryptographic devices. Initially, peer A (cryptographic device A) request its public IP and port, using a first and a second STUN server (Session Traversal Utilities for NAT). When each of the first and second STUN servers provides the public IP address and the port of peer A, this information is compared with each other. In case, the exterior view of peer A based on the first STUN server is equal or similar to the exterior view of peer A based on the second STUN server, a SMS with the exterior view of peer A is sent to peer B.

After peer B receives the SMS with the exterior view of peer A, peer B likewise requests its exterior view using a first and a second STUN server. Like peer A, also peer B determines whether the exterior view provided from the first STUN server is equal or similar to the exterior view provided by the second STUN server. In case, the exterior view of peer B based on the first STUN server is equal or similar to the exterior view of peer B based on the second STUN server, a SMS with the exterior view of peer B is sent to peer A. Notably, the first STUN server and the second STUN server used by peer A may be the same or maybe different as the first STUN server and the second STUN server used by peer B.

As can be seen in the embodiment of FIG. 7, both peers A and B successfully determined their exterior views and successfully submitted their exterior views to each other. Thus, as each of the two peers A and B is aware of the public IP address and port information of each other, a peer-to-peer connection may be established between peer A and B, using the above information.

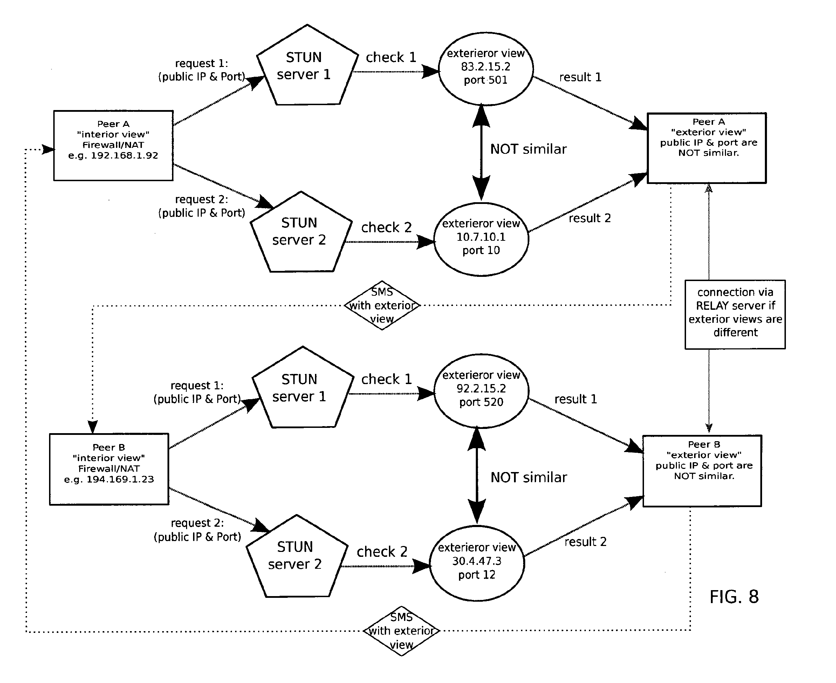

In the embodiment shown in FIG. 8, at least one of peer A and B has not successfully determined its exterior view, as the two exterior views provided by the first and second STUN servers are not similar to each other. In this case, a Relay server may be used for establishing the connection between peers A and B.

When the Relay server is used for establishing the connection between peers A and B, the Relay server is merely used as a middleman between the two peers and does not store any data or information. Instead, the Relay server merely transmits the encrypted data packets between the peers.

Likewise, also the STUN servers are only used for requesting the exterior view and the STUN servers and they do not save or store any data or other user information thereon. The STUN and RELAY servers may be low level programmed so that the servers are not detectable from the outside.

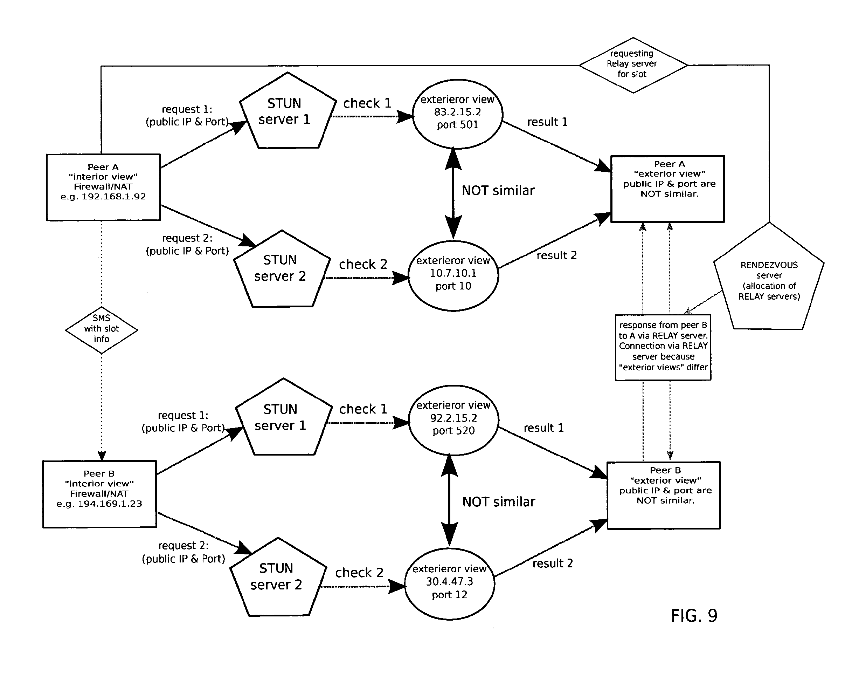

Regarding FIG. 9, a third alternative way of establishing the connection between the two peers A and B is shown. At first, the peer A requests a Rendezvous server for a slot on the RELAY server. When the Rendezvous server allocates a slot to peer A, peer A transmits a SMS to peer B with the information about the slot on the RELAY server.

Thereupon, peer B connects to the RELAY server and transmits, via the slot of the RELAY server, its exterior view to peer A. Peer A may then transmit, via the RELAY server, its exterior view to peer B and the two peers try to establish a peer-to-peer connection by using the exterior views. If a peer-to-peer connection may not be established, communication is still possible using the RELAY server.

According to one embodiment, the slot on the RELAY server remains active, even if the peer-to-peer connection has successfully established. In this case, the two peers A and B may still communicate with each other, using the slot, even if the peer-to-peer connection breaks.

In case the Rendezvous server is used for establishing a connection, the Rendezvous server may not save any data or information, but is merely an intermediary for establishing the connection.

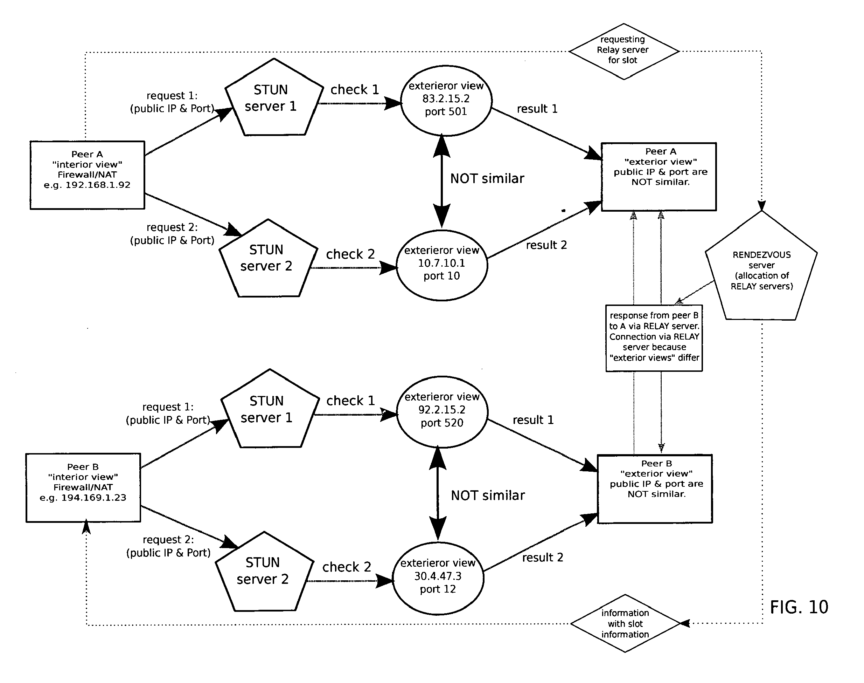

According to another exemplary embodiment, FIG. 10 illustrates the usage of unique serial numbers of a cryptographic device 120. Each cryptographic device 120 may comprise one unique serial number. When two cryptographic devices 120 are paired with each other, they may also transmit their unique serial numbers to each other.

As soon as a cryptographic device is connected to the Internet, the cryptographic device enrolls with the Rendezvous servers using its unique serial number. The cryptographic device 120 then is ready-to-receive incoming messages from or via the Rendezvous server. Every time the internet connection changes (i.e. the exterior view changes), a cryptographic device 120 may enroll again with the Rendezvous server. However, this process may be performed by an application on the mobile device 110 as a background process.

When peer A then wants to communicate with peer B, peer A requests the Rendezvous server whether peer B (the unique serial number of peer B) is enrolled with the Rendezvous server. If peer B is enrolled, peer A requests a slot an a RELAY server in the same manner, as discussed with regard to FIG. 9. Peer A then transmits, via the Rendezvous server, its IP/port and slot information to peer B and may then start receiving incoming messages from peer B via the RELAY server.

As discussed above in regard to FIGS. 8 and 9, the two peers then may still try to establish a peer-to-peer connection. However, in this embodiment, no SMS is needed to establish a communication between peers A and B.

By using the telephone function and using the data exchange / messaging / email communication with the cryptographic device 120, it is also possible to initiates a group chat or group communication. In this case, one participant of the group communication may act as an administrator to invite other participants for communication into the group communication. In one embodiment, all participants of the group communication need to be individually paired with each of the other participants of the group communication. However, in another embodiment, it may be possible that only the administrator of the communication is paired with each of the participants.

Even though, an internet peer-to-peer is used in the above described embodiments, encrypted data from the cryptographic device 120 may alternatively also be transmitted via the conventional telephone connection, which is used for regular transmission of speech.

In the following description, an overview is given about the different keys that may be used and about the different information that is transmitted between the cryptographic devices 120, for example during pairing process

### Definitions of Keys:

### Master Key (also Global Key)

The Master Key is a secret key which is contained in every cryptographic device. This key is identical in all cryptographic devices. It is used to protect the pairing process from eavesdropping as well as to encrypt the communication packets so that no third party products can communicate with a cryptographic device of the present invention. It is adamant that this key is kept secret. It has no influence on the 100% security during a communication, however, if a competitor got hold of the Master Key, he could decrypt the communications protocol of the cryptographic device and potentially build a compatible device, resulting in a potential security issue.

### Paired Secret Key

This is the secret key that is generated and exchanged during the pairing process, known only to the two paired devices. This Paired Secret Key is neither accessible by any third person nor is it possible to manipulate the Paired Secret Key as the Paired Secret Key is embedded in the microprocessor chip.

### Paired ID

This is the public ID that identifies the pairing and also identifies the Paired Secret Key to be used for communicating with another device.

### Public / Private Key pair

Each cryptographic device has its own private/public key pair, which can be a 2048 bit PGP key pair. The key pair is generated by the cryptographic device, when it first starts up. The private key is only known to the cryptographic device.

### Secret Private Key

### A secret key generated when the cryptographic device starts up for the first time. This key is used to encrypt private data, which might be stored on a SD-card, in the phone memory or in a cloud storage. Data encrypted with this key can then only be decrypted with this cryptographic device.

As discussed above, the cryptographic device 120 comprises a safe memory 210 and an open memory 220. Secret information in the safe memory 210 of the cryptographic device 120, which is not accessible from outside may be:

| Name | Size |
|---|---|
| Global key, equal over all devices | 32 Bytes |
| Paired Secret Keys | N * 32 Bytes |
| Private / Public key pair | 2 * 256 Bytes |
| Private Secret Key | 32 Bytes |
| PIN | 16 Bytes |
| Master Unlock Password | 256 Bytes |

Public information in the open memory 220 of the cryptographic device 120, which can be accessed through one of the interfaces may be:

| Name | Size |
|---|---|
| Name and Phone number of device owner | 64 Bytes |
| Paired IDs | N * 4 Bytes |
| Corresponding Name and Phone numbers | N * 64 Bytes |
| Unique Public Key | 256 Bytes |

As discussed above, each pairing process generates a user record with some public and some secret information. In the table below, exemplary information of a user record and its according sizes are illustrated:

| Name | Size |
|---|---|
| Paired ID | 4 Bytes |
| Paired Secret Key | 32 Bytes |
| Name and Phone number of contact | 64 Bytes |

Giving 100 Bytes of storage per paired user. With a 128 kB flash device there will be space of between 500 - 1000 Users. On a 512 kb device there is space for close to 5000 paired users.

In further embodiments, the cryptographic device 120 may be used for encrypting data that is to be stored in a cloud or in any other external memory. For this, data to be stored in a secure manner are encrypted by the cryptographic device 120 using a secret private key, which is only known to the cryptographic device 120. This secret private key is not shared with any other entity. Thus, encrypted data stored in a cloud or external memory can only be decrypted by the cryptographic device 120, itself. In addition, the encrypted data may not be stored in a cloud or external memory, but may also be safely stored in the mobile device 110 or in a memory card, which may be connected to the mobile device 110 or connected with the cryptographic device 120.

## Claims

1. A cryptographic device (120) for enabling encryption and decryption of data to be transferred between communication devices, the cryptographic device comprising:
a first interface (130) for connecting the cryptographic device to a communication device (110), wherein the first interface is adapted to transfer and receive data between the cryptographic device and the communication device;
a safe memory (210) storing one or more symmetric private keys for encrypting and
decrypting data;
an output module (150) for outputting decrypted data;
an input module (160) for inputting unencrypted data;
a microprocessor (210) adapted to:
receive encrypted data from the communication device via the first interface;
decrypt the received encrypted data from the communication device using one of the symmetric private keys;
transmit the decrypted data from the communication device to said output module for outputting the decrypted data;
receive unencrypted data from said input module;
encrypt the unencrypted data from said input module using one of the symmetric private keys; and
transmit the encrypted data from said input module to the communication device via the first interface; and
a connection manager (240) for managing a connection between the communication device with another communication device comprising another cryptographic device, wherein the symmetric private key used to encrypt and/or decrypt the data is a symmetric private key that is shared between the cryptographic device and the other cryptographic device.

2. The cryptographic device (120) of claim 1, further comprising:
a second interface (250) for establishing a connection with a second cryptographic device;
a key generating unit (230) for generating a symmetric private key when said connection to said second cryptographic device is established, wherein said generated symmetric private key is shared only between said cryptographic device and said second cryptographic device.

3. The cryptographic device (120) of claim 2, wherein the second interface (250) for establishing the connection to the second cryptographic device is equal to the first interface (130) and the generated symmetric private key used for communication between the cryptographic device and the second cryptographic device is encrypted with a public key of the second cryptographic device and is transmitted to the second cryptographic device via the internet using the communication device; or
wherein the connection with the second cryptographic device is a wire-bound connection or a NFC connection or a Bluetooth connection.

4. The cryptographic device (120) of any of claims 1 to 3, wherein:
the input module (160) comprises a microphone for receiving voice input by a user; and
the output module (150) comprises a speaker for outputting sound that is decrypted and received from the microcontroller (200); and/or
the input module comprises a keypad for receiving text input by the user; and
the output module comprises a display for displaying a text message that is decrypted and received from the microcontroller; and/or
the cryptographic device is a tablet for inputting and outputting text, sound, digital data files and video.

5. The cryptographic device (120) of any of claims 1 to 4, wherein the connection manager (240) is adapted to establish the peer-to-peer connection by:
determining a public IP address and a port of the communication device (110) using a Session Traversal Utilities for NAT, STUN, server; and
transmitting the public IP address and the port to the other communication device.

6. The cryptographic device (120) of claim 5, wherein the determining step is initiated as a reply to receiving a message from the other communication device comprising a public IP address and a port of the other communication device.

7. The cryptographic device (120) claim 5 or 6, wherein said peer-to-peer connection between the communication device and the other communication device is established using a RELAY server and/or a Rendezvous server.

8. The cryptographic device (120) of any of claims 2 to 7, wherein the cryptographic device is further adapted to decrypt incoming calls and encrypt outgoing calls to and from the second cryptographic device using a specific one of the private keys stored in the safe memory (200), wherein the specific private key is the shared key of the cryptographic device and the second cryptographic device.

9. The cryptographic device (120) of any of claims 1 to 8, wherein the cryptographic device is further adapted to receive unencrypted data through the first interface (130), encrypt the unencrypted data using one of the private keys and transmit the encrypted data through the first interface to the communication device (110).

10. The cryptographic device (120) of any of claims 1 to 9, wherein said connection between the communication device and the other communication device is a peer-to-peer connection.

11. A method for enabling encryption of data to be transferred between communication devices (110), the method comprising:
connecting a cryptographic device (120) to a communication device (110) via a first interface (130), wherein the first interface is adapted to transfer and receive data between the cryptographic device and the communication device;
receiving unencrypted data from an input module (160) of said cryptographic device;
encrypting the unencrypted data from the input module using a symmetric private key;
transmitting the encrypted data to the communication device via the first interface; and
managing a connection between the communication device with another communication device comprising another cryptographic device, wherein the symmetric private key used to encrypt the data is a symmetric private key that is shared between the cryptographic device and the other cryptographic device.

12. The method of claim 11, further comprising:
establishing a connection with a second cryptographic device via a second interface (250);
generating a symmetric private key when said connection to said second cryptographic device is established, wherein said generated symmetric private key is shared only between said cryptographic device and said second cryptographic device.

13. The method of claim 12, wherein the second interface (250) for establishing the connection to the second cryptographic device is equal to the first interface (130) and the generated symmetric private key used for communication between the cryptographic device and the second cryptographic device is encrypted with a public key of the second cryptographic device and is transmitted to the second cryptographic device via the internet using the communication device; or
wherein the connection with the second cryptographic device is a wire-bound connection or a NFC connection or a Bluetooth connection.

14. A method for enabling decryption of data to be transferred between communication devices (110), the method comprising:
connecting a cryptographic device (120) to a communication device (110) via a first interface (130), wherein the first interface is adapted to transfer and receive data between the cryptographic device and the communication device;
managing a connection between the communication device with another communication device comprising another cryptographic device, wherein the symmetric private key used to decrypt the data is a symmetric private key that is shared between the cryptographic device and the other cryptographic device;
receiving encrypted data from the communication device via the first interface;
decrypting the received encrypted data from the communication device using a symmetric private key; and
transmitting the decrypted data to an output module (150) for outputting the decrypted data.

15. The method of claim 14, further comprising:
establishing a connection with a second cryptographic device via a second interface (250);
generating a symmetric private key when said connection to said second cryptographic device is established, wherein said generated symmetric private key is shared only between said cryptographic device and said second cryptographic device.
